# EUROPÄISCHE PATENTSCHRIFT

(11) **EP 0 580 002 B1**
(45) Veröffentlichungstag und Bekanntmachung des Hinweises auf die Patenterteilung: **13.03.1996**
(21) Anmeldenummer: 93110663.7
(22) Anmeldetag: 03.07.1993
(51) Int. Cl.: F16H 57/08, F16B 21/18

(54) **Sicherungseinrichtung für eine Verbindung eines Planetengetriebes mit einem oder mehreren Planetenradsätzen und mit einem diese umfassenden Trommelbauteil**
Locking mechanism of a connection between a planetary gear and a drum, the gearing having one or several planetary units surrounded by that drum
Elément de fixation pour la liaison entre une transmission composée d'un ou plusieurs trains planétaires et un tambour entournant les trains planétaires

(30) Priorität: 23.07.1992 DE 4224331
(43) Veröffentlichungstag der Anmeldung: 26.01.1994
(73) Patentinhaber: FORD-WERKE AKTIENGESELLSCHAFT, D-50725 Köln (DE); FORD MOTOR COMPANY LIMITED, Brentwood, Essex CM13 3BW (GB); FORD FRANCE SOCIETE ANONYME, F-92506 Rueil Malmaison Cedex (FR)
(72) Erfinder: Premiski, Vladimir, D-5358 Bad Münstereifel/Willerscheidt (DE); Silk, Mark, D-5000 Köln 71 (DE); Schumann, Udo, D-5000 Köln 40 (DE)
(74) Vertreter: Messulam, Alec Moses

(56) Entgegenhaltungen:
- DE-A- 2 124 009
- DE-A- 2 227 555
- DE-C- 4 035 686

## Beschreibung

Die Erfindung bezieht sich auf eine Sicherungseinrichtung für eine Verbindung eines Planetenradgetriebes, mit einem oder mehreren Planetenradsätzen und mit einem diese umfassenden Trommelbauteil, der im Oberbegriff des Patentanspruches 1 erläuterten Art, wie sie aus der DE-C- 40 35 686 bekannt ist.

Aus der DE-A 21 24 009 ist eine Verbindung eines Planetenradgetriebes mit einem Trommelbauteil bekannt, wobei das Trommelbauteil eine innere Aufnahmetrommel für eine darauf angeordnete Lamellenkupplung bildet.

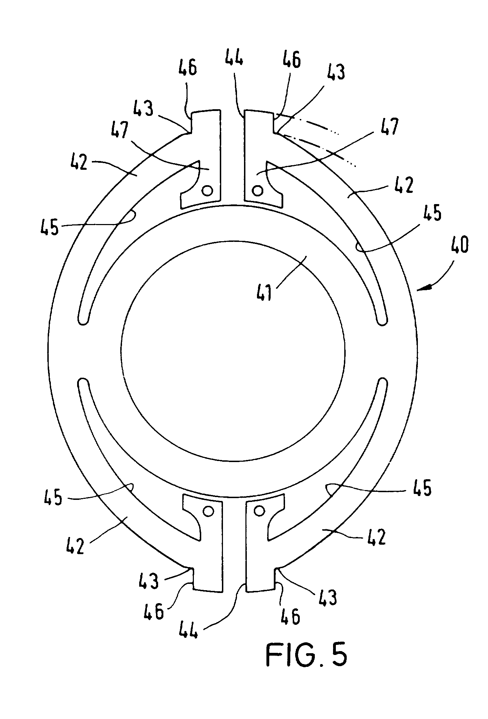

Ein Teil eines Planetenradträgers ist an seinem Außenumfang mit einer Art Verzahnung versehen und greift am Trommelbauteil in eine entsprechende Verzahnung ein, die auch die Laschen der Lamellen aufnimmt. Die Sicherung der Verbindung erfolgt über aus dem Trommelbauteil abgebogene Anschläge und Abbiegungen. (Siehe Fig. 5 der Schrift).

Aus der DE- A 22 27 555, insbesondere deren Fig. 1 B, ist eine Verbindung für ein Planetenradgetriebe mit einem Planetenradsatz, der von einem Trommelbauteil umfaßt ist, bekannt, wobei das Trommelbauteil eine Bremstrommel für ein diese umschlingendes Bremsband bildet.

Ein Teil eines Planetenradträgers ist an seinem Außenumfang mit einer Vielzahl radialer Vorsprünge versehen, die in axiale Ausnehmungen im offenen Ende des Trommelbauteil einragen und die Sicherung der Verbindung erfolgt durch einen in eine innen am Trommelbauteil ausgebildete Ringnut eingesprengten Seegerring.

Die Herstellung dieser Ringnut ist durch die am freien Ende des Trommelbauteiles ausgebildeten axialen Ausnehmungen verhältnismäßig schwierig und aufwendig. Weiterhin wird benachbart dem Planetenradträger und einem benachbarten Getriebebauteil eine Axialanlaufscheibe oder ein Axialnadellager angeordnet, das in einer bekannten Form an dem Planetenradträger angeordnet werden muß.

Die Erfindung hat sich die Aufgabe gestellt, eine Sicherungseinrichtung für eine Verbindung eines Planetenradgetriebes mit einem Trommelbauteil der im Oberbegriff des Patentanspruches 1 erläuterten Art derart zu verbessern, daß auf die schwierige Herstellung einer innenliegenden Ringnut am Trommelbauteil verzichtet werden kann und gegebenenfalls gleichzeitig eine zweckmäßige Anordnung des benachbart erforderlichen Axiallagers sichergestellt werden kann.

Gemäß der Erfindung wird diese Aufgabe gelöst, indem bei einem Planetenradgetriebe gemäß dem Oberbegriff des Patentanspruches 1 die im Kennzeichenteil des Patentanspruches 1 aufgezeigten Merkmale angewendet werden.

In den Ansprüchen 2 bis 4 sind weitere zweckmäßige Ausgestaltungen der Erfindung erläutert.

Dadurch, daß das Sicherungselement als ein dem Scheibenteil des Planetenradträgers benachbartes Ringbauteil mit zumindest zwei, vorzugsweise drei, sich radial bis in die Ausnehmungen des Trommelbauteiles erstreckenden Spreizarmen ausgebildet ist, die Ausnehmungen am Trommelbauteil mit vor der Ebene des Scheibenteiles des Planetenradträgers liegenden Hinterschnitten oder Nuten versehen sind und die radialen Arme mit ihren Seitenkanten in die Hinterschnitte in Umfangsrichtung durch plastische oder elastische Verformung in Umfangsrichtung einrastbar sind, wird eine zuverlässige Sicherung der Verbindung zwischen dem Planetenradgetriebe und dem Trommelbauteil erzielt, wobei am Ringbauteil innen ggf. ein erforderliches Axiallager angeordnet werden kann.

Dadurch, daß die an dem Ringbauteil ausgebildeten radialen Spreizarme durch einen in einer Ausrundung endenden radialen Schlitz aufgespalten sind, kann durch ein entsprechendes Keilwerkzeug eine plastische Verformung in Umfangsrichtung in die Hinterschnitte hinein erzielt werden.

Dadurch, daß die an dem Ringbauteil ausgebildeten radialen Spreizarme am inneren Ringkörper des Ringbauteiles über geneigte Stege und bogenförmige Bügel angeordnet sind, kann ein Einrasten der Seitenkanten der Spreizarme in die Ausnehmungen im Trommelbauteil in Umfangsrichtung in elastischer und daher in wieder demontierbarer Weise erzielt werden.

Dadurch, daß am inneren Ringkörper des Ringbauteiles eine Axialanlaufscheibe durch Kleben, Plattieren oder Klemmen befestigt wird, kann eine ggf. erforderliche zentrierte Anordnung eines Axiallagers einfach realisiert werden.

Selbstverständlich ist in ähnlicher Weise auch die zentrierte Anordnung eines Axial-Nadellagers an dem inneren Ringkörper des Ringbauteiles möglich.

Die Erfindung wird anhand von in den beiliegenden Zeichnungen gezeigten Ausführungsbeispielen näher erläutert. Es zeigt:
- Fig. 1: einen vertikalen Teilschnitt durch ein automatisches Getriebe für Kraftfahrzeuge in dem Bereich eines Planetenradgetriebes, das von einem Trommelbauteil umfaßt ist;
- Fig. 2: einen vertikalen Schnitt durch das Trommelbauteil;
- Fig. 3: eine Frontalansicht des Trommelbauteiles mit eingesetztem Scheibenteil des Planetenradträgers und dem Sicherungselement und
- Fig. 4: eine Ansicht der Verbindung in Richtung des Pfeiles IV in Fig. 3;
- Fig. 5: eine Frontansicht einer weiteren Ausführungsform eines Sicherungselementes, bei dem die radialen Spreizarme elastisch einrastbar sind.

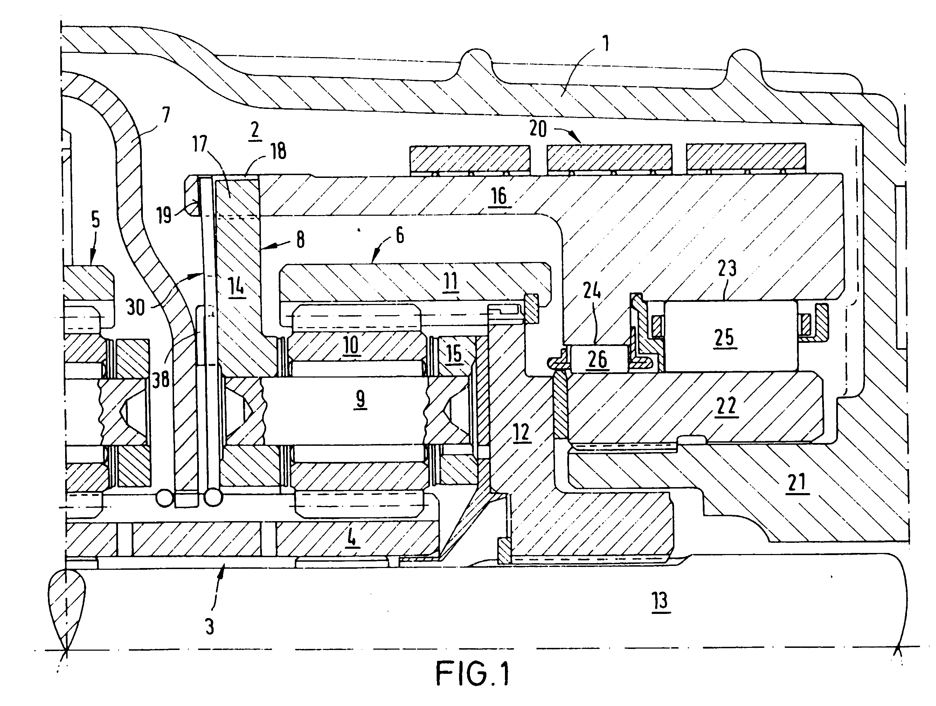

In Fig. 1 ist in einem Getriebegehäuse 1 in dessen hinterem Bauraum 2 ein Planetenräder-Wechselgetriebe in Form eines sogenannten Simpson-Satzes 3 angeordnet, der aus einem gemeinsamen Sonnenrad 4, einem ersten Planetenradsatz 5 und einem zweiten Planetenradsatz 6 besteht.

Das Antriebsdrehmoment wird vcn einem nicht gezeigten Vorschalt-Planetenradsatz auf eine Mittelwelle übertragen, die einen Kupplungsträger antreibt, auf dem zwei Sätze von Lamellenkupplungen angeordnet sind, wobei über eine der Lamellenkupplungen über ein topfförmiges Trommelbauteil 7 das gemeinsame Sonnenrad 4 des Simpson-Satzes 3 antreibbar ist.

Der zweite Planetenradsatz 6 des Simpson-Satzes 3 besteht aus einem Planetenradträger 8 mit einer Vielzahl von auf Planetenradbolzen 9 angeordneten Planetenrädern 10, die einerseits mit einem Bereich des gemeinsamen Sonnenrades 4 und andererseits mit einem Ringrad 11 in Eingriff stehen, das über einen Nabenteil 12 in treibender Verbindung mit der Abtriebswelle 13 des Getriebes steht.

Der Planetenradträger 8 besteht im wesentlichen aus einem Scheibenbauteil 14 und einem Korbbauteil 15, die in bekannter Weise die Planetenräder 10 auf den Planetenradbolzen 9 aufnehmen. Das Planetenradgetriebe 6 ist von einer Bremstrommel (in den Ansprüchen als Trommelbauteil bezeichnet) 16 umfaßt, die über eine formschlüssige Vorsprung 17-/Ausnehmung 18-Verbindung zwischen dem Scheibenbauteil 14 des Planetenradträgers 8 und dem freien Ende der Bremstrommel 16 treibend mit dem Planetenradträger verbunden ist. Die Bremstrommel 16 kann über ein an ihrem Außenumfang angreifendes Bremsband 20 den Planetenträger 8 gegen Drehung in beiden Drehrichtungen festlegen.

Das Getriebegehäuse 1 weist einen axialen Vorsprung 21 auf, auf dem ein Innenlaufring 22 einer Klemmkörperfreilauf-Radiallager-Kombination 25/26 angeordnet ist.

Das Trommelbauteil 16 ist an seinem geschlossenen Ende mit Innenlaufflächen 23 und 24 für einen Klemmkörperfreilauf 25 bzw. ein Radiallager 26 versehen.

Der Klemmkörperfreilauf 25 ermöglicht ein Festlegen des Planetenradträgers in einer Drehrichtung, wohingegen über das Bremsband 20 der Planetenradträger 8 in beiden Drehrichtungen festgelegt werden kann.

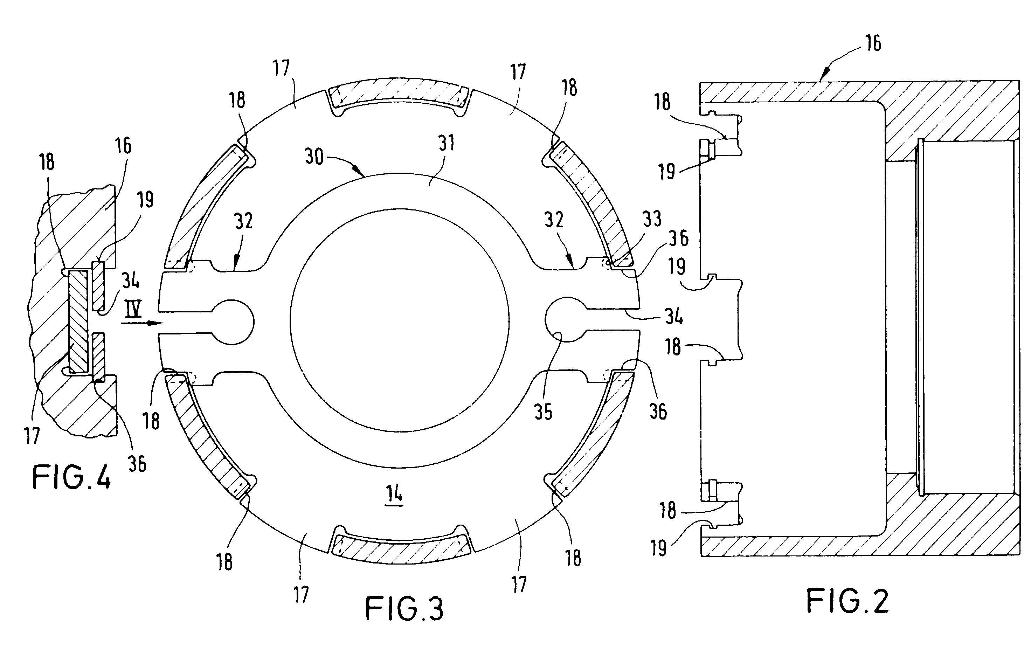

Gegenstand der Erfindung ist ein Sicherungselement 30 bzw.40 dessen Aufbau und Funktionsweise in Zusammenhang mit den Figuren 2 bis 4 näher erläutert wird.

Wie aus den Figuren 2 und 3 ersichtlich ist, ist das Trommelbauteil 16 an seinem freien Ende mit einer Anzahl von axialen Ausnehmungen 18 versehen, in die die in Fig. 3 angedeuteten Vorsprünge 17 des Scheibenteiles 14 des Planetenradträgers 8 einragen.

Gemäß der Erfindung sind die Ausnehmungen 18 mit vor der Ebene des Scheibenbauteiles 14 liegenden Hinterschnitten 19 versehen.

Das Sicherungselement 30 besteht aus einem inneren Ringkörper 31 mit in dieser Ausführungsform zwei Paaren von Spreizarmen 32, die mit seitlichen Zentrierschultern 33 dem Innenumfang des Trommelbauteiles 16 angepaßt sind und mit ihren Endkanten 36 in die Ausnehmungen 18 im Trommelbauteil 16 einragen. Die Spreizarme 32 sind in dieser Ausführungsform durch einen radialen Schlitz 34, der in einer Ausrundung 35 endet, gespalten.

Wie am besten aus Fig. 4 ersichtlich ist, werden im Trommelbauteil 16 in dessen Ausnehmungen 18 die Vorsprünge 17 des Scheibenteiles 14 des Planetenradträgers 8 angeordnet. Danach wird das Sicherungselement 13 mit seinen Spreizarmen 32 in die Ausnehmungen 18 eingeführt, und durch Einwirken eines Keilwerkzeuges im Schlitz 34 werden die Endkanten 36 der Spreizarme 32 in die Hinterschnitte 19 in den Ausnehmungen 18 hineingedrängt. Damit ist eine Sicherung der Verbindung zwischen dem Trommelbauteil und dem Planetenradträger hergestellt, und an den inneren Ringkörper 31 des Sicherungselementes kann eine ggf. erforderliche Axiallageranordnung in Form einer aufgesetzten Axialanlaufscheibe 38 oder eines Axial-Nadellagers angeordnet werden.

Die erste gezeigte Ausführungsform weist zwar den Vorteil auf, daß die Sicherung der Verbindung zwischen dem Trommelbauteil bauteil 16 und dem Scheibenteil 14 des Planetenradträgers 8 mit Hilfe einer entsprechend ausgebildeten Montagevorrichtung automatisiert erfolgen kann, die plastische Verformung der Spreizarme 32 bringt jedoch den Nachteil mit sich, daß ein nachträgliches Lösen nur unter Zerstörung des Sicherungselementes 30 möglich ist.

Um diesen Nachteil zu vermeiden, kann das Sicherungselement in der in Fig. 5 gezeigten Ausführungsform ausgebildet werden.

Das in Fig. 5 gezeigte Sicherungselement 40 weist wieder einen inneren Ringkörper 41 und zwei Paare von Spreizarmen 42 mit Zentrierschultern 43 auf. Die Spreizarme 42 erstrecken sich in diesem Fall nicht vom nächstliegenden radialen Bereich des innenliegenden Ringkörpers 41 aus, sondern von dessen seitlichem Bereich,so daß ein radialer Schlitz 44 gebildet wird, der über mondförmige Ausschnitte 45 die Spreizarme 42 bogenförmig gestaltet, so daß sie in Umfangsrichtung elastisch verformbar sind. Den Endkanten 46 der Spreizarme 42 gegenüberliegend sind Vorsprünge 47 nach innen ragend angeordnet, die mittels eines entsprechenden Zangenwerkzeuges erfaßbar sind, um ein Ein- und Ausrasten der Endkanten 46 der Spreizarme 42 in die Hinterschnitte 19 der Ausnehmungen 18 zu bewerkstelligen.

Auch hier kann wieder am inneren Ringkörper 41 des Sicherungselementes 40 ein ggf. erforderliches Axiallager 38 angeordnet werden, wobei die verschiedensten Möglichkeiten gegeben sind. So kann z.B. eine Bronze-Laufschicht auf den inneren Ringkörper 41 durch Kleben, Plattieren oder dergleichen aufgebracht werden, oder eine separate Anlaufscheibe 38 kann durch die an sich bekannten Zungen am Aussen- oder Innenumfang durch Umbiegen festgeklemmt werden.

In ähnlicher Weise kann ein Axial-Nadellager am inneren Ringkörper 41 befestigt und zentriert werden.

## Patentansprüche

1. Sicherungseinrichtung für eine Verbindung eines Planetenradgetriebes mit einem oder mehreren Planetenradsätzen und mit einem diese umfassenden Trommelbauteil (16), wobei der die Planetenräder (10) auf Planetenradbolzen (9) drehbar gelagert tragende Planetenradträger (8) mit einem im Durchmesser vergrößerten Scheibenteil (14) über eine formschlüssige Vorsprung/Ausnehmung(17/18)-Verbindung mit dem offenen Ende des Trommelbauteiles (16) treibend verbunden ist und diese formschlüssige Verbindung über ein Sicherungselement (30; 40) axial gesichert ist,
**dadurch gekennzeichnet**, daß
- das Sicherungselement (30; 40) als dem Scheibenteil (14) benachbartes Ringbauteil mit einem inneren Ringkörper (31; 41) und mit zumindest zwei, vorzugsweise drei, sich radial bis in die Ausnehmungen (18) des Trommelbauteiles (16) erstreckenden Spreizarmen (32; 42) ausgebildet ist,
- die Ausnehmungen (18) am Trommelbauteil (16) mit vor der Ebene des Scheibenteiles (14) liegenden Hinterschnitten (19) versehen sind und
- die radialen Spreizarme (32; 42) mit ihren Endkanten (36; 46) in die Hinterschnitte (19) in Umfangsrichtung durch plastische oder elastische Verformungen einrastbar sind.

2. Sicherungseinrichtung nach Anspruch 1,
**dadurch gekennzeichnet**, daß
- die an dem inneren Ringkörper (31) ausgebildeten radialen Spreizarme (32) durch einen in einer Ausrundung (35) endenden radialen Schlitz (34) aufgespalten sind und
- durch ein keilförmiges Werkzeug in Umfangsrichtung plastisch in die Hinterschnitte (19) in den Ausnehmungen (18) im Trommelbauteil (16) hineinverformbar sind.

3. Sicherungseinrichtung nach Anspruch 1,
**dadurch gekennzeichnet**, daß
- die an dem inneren Ringkörper (41) ausgebildeten bogenförmigen Spreizarme (42) über halbmondförmige Schlitze (45) freigeschnitten sind und
- in Umfangsrichtung in die Hinterschnitte (19) in den Ausnehmungen (18) im Trommelbauteil (16) elastisch federnd einrastbar sind.

4. Sicherungseinrichtung nach einem oder mehreren der Ansprüche 1 bis 3,
**dadurch gekennzeichnet**, daß
- am inneren Ringkörper (31 bzw. 41) der Sicherungselemente (30 bzw. 40) ein ggf. erforderliches Axiallager (38) (Axial-Anlaufscheibe oder Axial-Nadellager) radial zentriert und unverlierbar befestigbar ist.

## Claims

1. A securing device for a connection between a planetary gear unit comprising at least one set of planet gears and a drum member (16) surrounding them, wherein the planet carrier (8) carrying the planet gears (10) rotatably mounted on planet gear spindles (9) includes a larger diameter disk member (14) with which it is drivingly connected to the open end of the drum member (16) by a form-fitting projection/recess (17/18) connection, and this form-fitting connection is axially secured by means of a securing element (30; 40),
characterised in that
- the securing element (30; 40) is formed as a ring member having an inner ring part (31; 41) adjacent to the disk member (14) and having at least two, and preferably three, pairs of spreading arms (32; 42) extending radially into the recesses (18) of the drum member (16),
- the recesses (18) in the drum member (16) are provided with undercuts (19) located in front of the plane of the disk member (14), and
- the end parts (36; 46) of the edges of the radial spreading arms (32; 42) are engageable into the undercuts (19) in the circumferential direction by plastic or elastic deformation.

2. A securing device according to claim 1,
characterised in that
- the radial spreading arms (32) formed on the inner ring part (31) are separated by a radial slit (34) ending in a rounded part (35), and
- are plastically deformable in the circumferential direction into the undercuts (19) in the recesses (18) in the drum member (16).

3. A securing device according to claim 1,
characterised in that
- the arcuate spreading arms (42) formed on the inner ring part (41) are cut free by crescent-shaped slits (45) and
- are elastically resiliently engageable in the circumferential direction into the undercuts (19) in the recesses (18) in the drum member (16).

4. A securing device according to one or more of claims 1 to 3,
characterised in that
- an axial bearing (38) (axial thrust washer or axial needle bearing) can if required be fixed, secure from loss and radially centred, on the inner ring part (31 or 41) of the securing element (30 or 40).

## Revendications

1. Dispositif de blocage destiné à une liaison d'une transmission à trains planétaires comprenant un ou plusieurs trains planétaires et un élément en forme de tambour (16) qui entoure ceux-ci, dans lequel le porte-satellites (8) qui porte les satellites (10) montés tournants sur des arbres de satellites (9) est relié en entraînement à l'extrémité ouverte de l'élément en forme de tambour (16) par une partie en forme de disque (14) dont le diamètre est agrandi, et ce, par l'intermédiaire d'une liaison par conjugaison des formes entre des parties en saillie et des évidements (17/18), cette liaison par conjugaison des formes étant bloquée axialement par l'intermédiaire d'un élément de blocage (30 ; 40),
caractérisé par le fait que :
- l'élément de blocage (30 ; 40) est réalisé sous la forme d'un élément annulaire qui est contigu à la partie en forme de disque (14) et qui comprend un corps annulaire intérieur (31 ; 41), ainsi qu'au moins deux bras à expansion (32; 42), et de préférence trois, qui s'étendent radialement jusque dans les évidements (18) de l'élément en forme de tambour (16),
- les évidements (18) de l'élément en forme de tambour (16) sont pourvus de contre-dépouilles (19) qui sont situées en avant du plan de la partie en forme de disque (14), et :
- grâce à des déformations plastiques ou élastiques, les bras à expansion radiaux (32 ; 42) peuvent être encliquetés dans les contre-dépouilles (19) par leur bords d'extrémité (36 ; 46) en se déplaçant dans la direction périphérique.

2. Dispositif de blocage selon la revendication 1,
caractérisé par le fait que :
- les bras à expansion radiaux (32) qui sont formés sur le corps annulaire intérieur (31) sont divisés par une fente radiale (34) terminée par un contour rond (35), et :
- au moyen d'un outil en forme de coin, ils peuvent être déformés plastiquement dans la direction périphérique pour les faire entrer dans les contre-dépouilles (19) qui sont ménagées dans les évidements (18) de l'élément en forme de tambour (16).

3. Dispositif de blocage selon la revendication 1,
caractérisé par le fait que :
- les bras à expansion en forme d'arcs (42) qui sont formés sur le corps annulaire intérieur (41) sont découpés par des fentes (45) en forme de croissants, et ;
- ils peuvent être encliquetés élastiquement, par déplacement dans la direction périphérique, dans les contre-dépouilles (19) qui sont ménagées dans les évidements (18) de l'élément en forme de tambour (16).

4. Dispositif de blocage selon une ou plusieurs des revendications 1 à 3, caractérisé par le fait que :
- un palier de butée (38) qui est nécessaire le cas échéant (disque d'arrêt axial ou palier de butée à aiguilles) est fixé au corps annulaire intérieur (31, respectivement 41) des éléments de blocage (30, respectivement 40) en étant centré dans le sens radial et de façon à être imperdable.
